# DEMANDE DE BREVET EUROPEEN

(11) **EP 1 466 818 A2**
(43) Date de publication de la demande: **13.10.2004**
(21) Numéro de dépôt: 04356049.9
(22) Date de dépôt: 08.04.2004
(51) Int. Cl.: B62D 65/00, B05B 13/02

(54) **Procédé de fabrication d'une pièce de carrosserie de véhicule automobile, destinée à être peinte de la même couleur que la carrosserie du véhicule**

(30) Priorité: 10.04.2003 FR 0304487
(71) Demandeur: Exsto Thermoplastiques, 26100 Romans sur Isere (FR)
(72) Inventeur: Baule, Michel, 26100 Romans sur Isère (FR)
(74) Mandataire: Guerre, Dominique

(57) **Abrégé**

Ce procédé comprend l'utilisation d'au moins un support (3) permettant de monter ladite pièce de carrosserie (2) sur ladite carrosserie (4) de telle sorte que la ou les faces (2a) à peindre de cette pièce de carrosserie (2) soient exposées au flux de peinture permettant de peindre la carrosserie (4).

Selon l'invention, ce procédé comprend l'étape consistant à fabriquer en une même opération ladite pièce de carrosserie (2) et ledit support (3) avec une zone de liaison (13) de cette pièce de carrosserie (2) à ce support (3), cette zone de liaison (13) pouvant être sectionnée ou rompue afin de séparer la pièce de carrosserie (2) et le support (3).

## Description

La présente invention concerne un procédé de fabrication d'une pièce de carrosserie de véhicule automobile, destinée à être peinte de la même couleur que la carrosserie du véhicule. Cette pièce peut être en particulier la trappe destinée à fermer l'accès au bouchon du réservoir de carburant du véhicule, ou peut être notamment un corps de rétroviseur ou un pare-chocs.

Il est connu (cf. DE-C-3722869) de monter une pièce de carrosserie à peindre sur un support et de placer ce support comportant cette pièce sur la carrosserie à peindre, de telle sorte que la face de la pièce de carrosserie devant être peinte se trouve exposée à la peinture pulvérisée, laquelle est délivrée par exemple par un robot, ou machine automatique, ou encore manuellement avec un pistolet.

La pièce de carrosserie est ainsi peinte simultanément au reste de la carrosserie, ce qui élimine le risque d'un écart de teinte, un tel écart pouvant se produire si la pièce de carrosserie était peinte séparément de la carrosserie.

Ce mode opératoire actuel a toutefois pour inconvénient d'obliger à gérer en parallèle des approvisionnements en pièces de carrosserie et en supports appropriés, et d'obliger à un assemblage d'une pièce de carrosserie à peindre à un ou plusieurs supports correspondants, puis à un désassemblage une fois la pièce peinte.

Cette gestion des approvisionnements constitue une contrainte pratique certaine, et les systèmes de montage des pièces de carrosserie sur les supports correspondants ne sont pas toujours d'une manipulation très simple et rapide.

La présente invention vise à remédier à ces inconvénients.

Plus particulièrement, la présente invention a pour objet un procédé permettant d'apparier, de manière simple, pièces de carrosseries et supports correspondants.

De manière générale, la présente invention concerne un procédé de fabrication d'une pièce de carrosserie de véhicule automobile, peinte de la même couleur que la carrosserie dudit véhicule, selon lequel, de manière connue en soi :
a) on fabrique ou obtient la pièce de carrosserie par moulage d'une manière plastique
b) on dispose d'un support permettant de monter ladite pièce sur ladite carrosserie ou sur un subjectile de cette dernière
c) on procède à une opération de peinture de la carrosserie, consistant à exposer cette dernière à une peinture pulvérisée, opération pendant laquelle la pièce de carrosserie est montée, par ou grâce au support, sur ladite carrosserie, ou sur un subjectile de cette dernière, en sorte que la ou les faces à peindre de la pièce de carrosserie soient exposées à la peinture pulvérisée.

Mais, selon la présente invention, lors de l'opération (a) de moulage, ou par la même opération (a) de moulage, on fabrique de façon monobloc un ensemble comprenant :
- le support proprement dit,
- la pièce de carrosserie agencée, par les moyens définis ci-après à titre d'exemple, pour être maintenue par rapport au support dans une position relative dite "de peinture", selon laquelle la face à peindre se trouve exposée à la peinture pulvérisée pendant l'opération de peinture (c),
- et des moyens de liaison entre le support et la pièce, cette dernière étant dans sa position de peinture, agencés pour être sectionnés ou rompus, après l'opération de peinture (c).

Grâce à l'invention, seul l'approvisionnement en pièces de carrosserie est à gérer, étant donné que le ou les supports correspondant à une pièce sont reliés à cette dernière dès le moment de la fabrication de ladite pièce.

Deux modes d'exécution principaux de la solution exposée précédemment sont considérés.

Selon un premier mode, les moyens de liaison sont aménagés pour maintenir à eux seuls la pièce de carrosserie par rapport au support, dans la position relative définie précédemment, dite de peinture.

Selon un deuxième mode d'exécution, de manière générale, les moyens de liaison comprennent :
- une zone de liaison, entre la pièce de carrosserie et le support, aménagée de manière insuffisante pour maintenir à elle seule ladite pièce par rapport audit support, dans la position relative dite de peinture
- des moyens supplémentaires de positionnement de ladite pièce par rapport audit support, dans ladite position de peinture.

D'un côté, la zone de liaison, et de l'autre côté les moyens supplémentaires de positionnement, sont agencés chacun pour être sectionnés ou rompus, après l'opération de peinture (c).

A titre d'exemple du deuxième mode d'exécution, la zone de liaison est aménagée, par exemple sous la forme d'un film-charnière, pour être sectionnée ou rompue, afin de séparer la pièce de carrosserie et le support (3), après l'opération de peinture (c).

Cet aménagement peut être obtenu par le fait que, pendant l'opération de moulage, on fabrique la zone de liaison de telle sorte qu'elle permette au moins deux positions relatives de la pièce de carrosserie et du support, à savoir une position de "moulage" optimisée pour la fabrication de la pièce de carrosserie et du support, et la position définie précédemment, dite de peinture.

Selon cet exemple de réalisation du deuxième mode d'exécution, les moyens supplémentaires de positionnement peuvent comprendre, en ce qui les concerne, des moyens d'assemblage réciproques entre, d'une part le support, et d'autre part, la face non exposée de la pièce de carrosserie.

Selon un autre exemple de ce deuxième mode d'exécution, les moyens supplémentaires de positionnement comprennent un jonc reliant le support et la face de la pièce de carrosserie, non exposée à la peinture pulvérisée, sécable ou ruptible, par exemple à sa jonction avec la face non exposée de la pièce de carrosserie.

La présente invention concerne aussi, de manière générale, et considéré en tant que composant intermédiaire dans un processus de fabrication, un ensemble monobloc, obtenu par moulage par une même opération d'une matière plastique, comprenant comme défini précédemment :
- un support,
- une pièce de carrosserie, agencée pour être maintenue par rapport au support dans une position relative dans laquelle une face de la pièce se trouve exposée,
- et des moyens de liaison entre le support et la pièce, dans sa positon exposée, agencés pour être sectionnés ou rompus.

Ainsi, grâce à l'invention, seul l'approvisionnement en pièces de carrosserie est à gérer, étant donné que le ou les supports correspondant à une pièce sont reliés à cette pièce, dès le moment de la fabrication de cette pièce.

Pour sa bonne compréhension, l'invention est à nouveau décrite ci-dessous en référence au dessin schématique annexé représentant, à titre d'exemples non limitatifs, deux formes de réalisation possibles d'un ensemble monobloc obtenu par moulage d'une matière plastique par une même opération, comprenant une pièce de carrosserie, un support, et des moyens de liaison entre le support et la pièce.
La figure 1 est une vue en perspective de cet ensemble, selon une première forme de réalisation, d'un côté de la pièce de carrosserie non destiné à être peint ;
la figure 2 en est une vue de ce même ensemble, du côté de la pièce de carrosserie destiné à être peint ;
la figure 3 est une vue en perspective dudit ensemble selon la deuxième forme de réalisation, dans une position relative, dite de moulage, de la pièce de carrosserie et du support ;
la figure 4 est une vue de ce même ensemble, similaire à la figure 3, dans une autre position relative, dite de peinture, de la pièce de carrosserie et du support, et
la figure 5 est une vue de cet ensemble, dans la position relative dite de peinture de la pièce de carrosserie par rapport au support, après mise en place sur une carrosserie en vue de l'opération de peinture simultanée de cette pièce de carrosserie et de la carrosserie.

Par simplification, les parties ou éléments d'une forme de réalisation qui se retrouvent de manière identique ou similaire dans l'autre forme de réalisation seront identifiés par les mêmes références numériques et ne seront pas à nouveau décrits.

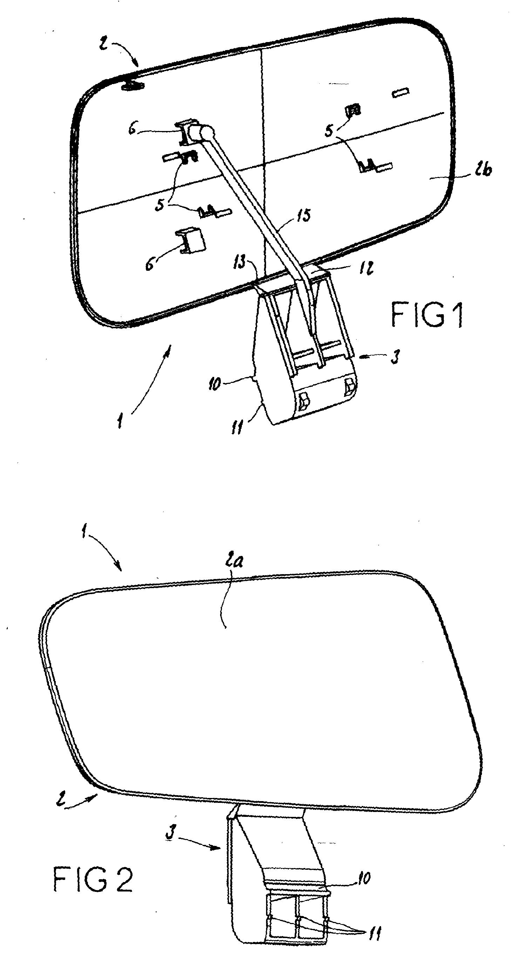

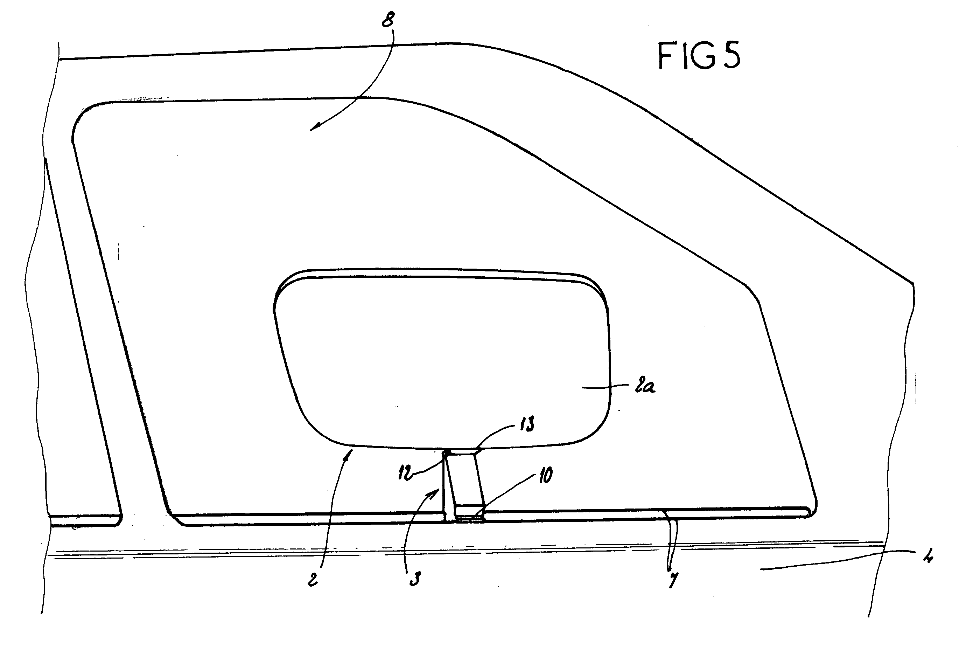

Les figures 1 et 2 représentent un ensemble 1 formé notamment par une pièce de carrosserie 2 devant être peinte sur sa face 2a et par un support 3 permettant, comme l'illustre la figure 5, de monter cette pièce de carrosserie 2 sur une carrosserie 4 de véhicule à peindre, cette dernière étant supportée par un subjectile non représenté. Ladite pièce de carrosserie 2 est en effet destinée à être peinte de la même couleur que la carrosserie 4 et doit être peinte simultanément à celle-ci, afin d'éliminer tout risque d'un écart de teinte.

Dans l'exemple représenté, la pièce de carrosserie 2 est par exemple une trappe destinée à fermer l'accès au bouchon du réservoir de carburant du véhicule, reliée à un support 3 unique. Cette pièce de carrosserie 2 pourrait également être notamment un corps de rétroviseur ou un pare-chocs, et être reliée à plusieurs supports 3, si nécessaire.

L'ensemble 1 est réalisé par moulage d'une matière plastique en une seule pièce.

Comme le montre la figure 1, la trappe 2 comprend, sur sa face 2b non destinée à être peinte, des saillies de positionnement 5 et des passants 6 venus de moulage avec elle. Ces saillies 5 et passants 6 permettent, après peinture de la trappe 2, le montage de cette trappe sur la structure assurant le pivotement de la trappe par rapport à la carrosserie 4, entre des positions d'ouverture et de fermeture.

Le support 3 est conformé pour pouvoir être monté sur la carrosserie 4 en un emplacement de celle-ci non destiné à être peint. Il est positionné, dans une position relative dite de peinture, par rapport à la pièce 2, de manière à, lorsque ledit support est monté sur la carrosserie 4, exposer la face 2a de cette pièce au flux de peinture, lequel flux est délivré, par exemple par un robot. Comme cela apparaît sur la figure 5, ce support 3 est par exemple destiné à être inséré entre les deux parois parallèles 7 d'une portière, qui délimitent l'espace dans lequel est destinée à coulisser une vitre du véhicule, au niveau du rebord de la carrosserie 4 définissant la partie inférieure d'une baie 8. Le support 3 comprend à cet effet un rebord d'arrêt 10 limitant son enfoncement entre ces parois 7, et des bossages 11 assurant son coincement entre ces mêmes parois 7.

Comme indiqué précédemment, ce support 3 peut-être adapté pour être fixé sur toute autre partie de la carrosserie du véhicule, ou encore sur le subjectile de cette dernière lors de l'opération de peinture.

Des moyens de liaison sont disposés entre le support 3 et la pièce de carrosserie 2, dans sa position relative de peinture, et agencés pour être sectionnés ou rompus, après l'opération de peinture.

Ainsi que le montre plus particulièrement la figure 1, le support 3 se raccorde à la pièce 2 par une zone amincie 13, par l'intermédiaire d'un rebord 12. Cette zone amincie 13 appartenant aux moyens de liaison selon l'invention présente une épaisseur réduite, faisant qu'elle est facile à sectionner.

Les moyens de liaison comprennent également un jonc 15 solidaire du support 3 par une extrémité, et solidaire de l'un des passants 6 par son autre extrémité. Ce jonc 15 est rigide et est relié rigidement au support 3, d'une part, et à la pièce 2, d'autre part, par l'intermédiaire du passant 6, de sorte qu'il maintient rigidement la pièce 2 par rapport au support 3 dans la position "de peinture" que doit occuper cette pièce au cours de l'opération de peinture, lorsque l'ensemble 1 est mis en place sur la carrosserie 4.

L'extrémité du jonc 15 raccordée au passant 6 présente une forme cylindrique, facilitant sa section au niveau de sa jonction avec la face 2b non exposée de la pièce 2, en vue de la séparation, après peinture, de la pièce 2 et du support 3.

En pratique, l'ensemble 1 est mis en place sur la carrosserie 4 puis, après peinture, le support 3 est séparé de la trappe 2 par section ou rupture des moyens de liaison précédemment décrits, et plus précisément de la zone amincie 13 au ras de la pièce 2, et section ou rupture du jonc 15 au ras du passant 6, et donc de la face 2b de la pièce 2.

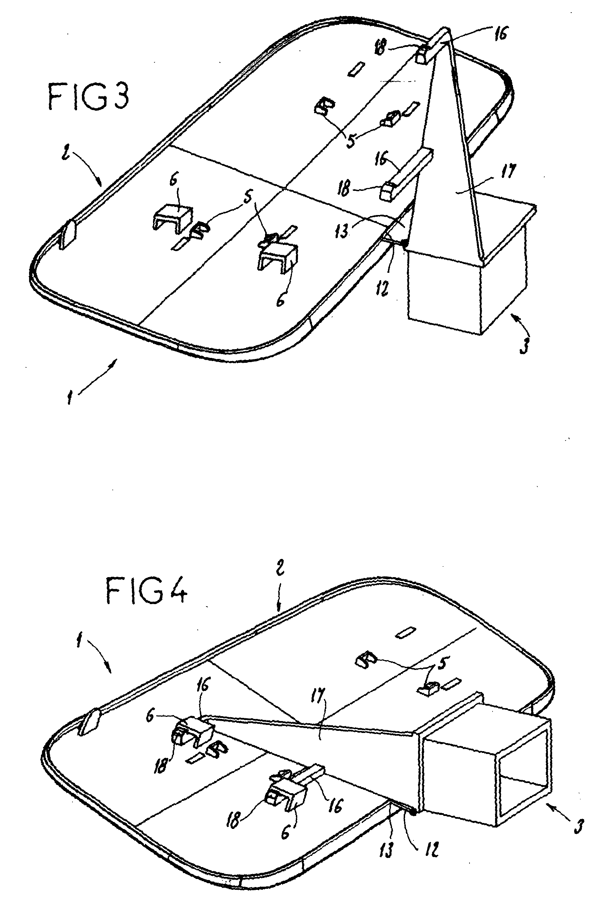

Les figures 3 et 4 montrent une deuxième forme de réalisation de l'ensemble 1, dans laquelle le support 3 n'est pas relié rigidement à la pièce 2, en particulier par un jonc 15 tel que précité. La zone amincie 13 des moyens de liaison forme dans ce cas une charnière-film 12 permettant de déplacer ce support 3 par rapport à la pièce 2 entre les positions montrées respectivement sur ces figures 3 et 4, à savoir une position "de moulage", montrée sur la figure 3, optimisée pour la fabrication de la pièce 2 et du support 3, et la position "de peinture", montrée sur la figure 4.

Pour le maintien dans cette position relative de peinture, le support 3 comprend deux doigts parallèles 16, faisant saillie latéralement d'une extension 17 qu'il comporte, et comprenant des ergots 18 à leurs extrémités libres. Ces doigts 16 sont positionnés et dimensionnés pour pouvoir être engagés au travers des passants 6, avec prise d'appui des ergots 18 contre les parois de ces passants 6, ainsi que cela est visible sur la figure 4.

En pratique, dans ce cas, le support 3 est pivoté par rapport à la pièce 2 jusqu'à engagement des doigts 16 dans les passants 6, puis l'ensemble 1 est mis en place sur la carrosserie 4. Après peinture, les doigts 16 sont extraits des passants 6, et la zone amincie 13 des moyens de liaison est sectionnée au ras de la pièce 2. A titre de variante, la zone amincie peut néanmoins être sectionnée avant l'opération de peinture.

Ainsi qu'il apparaît de ce qui précède, l'invention apporte une amélioration déterminante à la technique antérieure, en fournissant un procédé de fabrication d'une pièce de carrosserie de véhicule automobile, destinée à être peinte de la même couleur que la carrosserie du véhicule, et un ensemble formé par ladite pièce de carrosserie, au moins un support et des moyens de liaison entre la pièce et le support, permettant de monter cette pièce sur la carrosserie à peindre. Ceci permet d'alléger notablement la gestion des approvisionnements en pièces de carrosserie et en supports correspondants, étant donné que le ou les supports correspondant à une pièce de carrosserie sont reliés à cette dernière dès le moment de la fabrication de cette pièce.

Le procédé selon l'invention et ledit ensemble qui le caractérise permettent également de faciliter notablement l'assemblage d'une pièce de carrosserie à un ou plusieurs supports correspondants, compte tenu de la proximité de cette pièce et de ce ou ces supports et de la liaison de cette pièce à ce ou ces supports.

## Revendications

1. Procédé de fabrication d'une pièce de carrosserie (2) de véhicule automobile, peinte de la même couleur que la carrosserie (4) dudit véhicule, procédé selon lequel :
a) on fabrique ou obtient la pièce de carrosserie (2) par moulage d'une matière plastique ;
b) on dispose d'un support (3) permettant de monter ladite pièce sur ladite carrosserie (4), ou sur le subjectile de cette dernière ;
c) on procède à une opération de peinture de la carrosserie (4), consistant à exposer cette dernière à une peinture pulvérisée, opération pendant laquelle la pièce de carrosserie (2) est montée par le support (3) sur la carrosserie (4), ou sur un subjectile de cette dernière, en sorte que la ou les faces (2a) à peindre de ladite pièce soient exposées à la peinture pulvérisée ;
**caractérisé en ce que**, par la même opération (a) de moulage, on fabrique de façon monobloc un ensemble comprenant le support (3), la pièce de carrosserie (2) agencée pour être maintenue par rapport au support (3) dans une position relative dite "de peinture", selon laquelle la face (2a) à peindre est exposée à la peinture pulvérisée pendant l'opération de peinture (c), ainsi que des moyens de liaison entre ledit support et ladite pièce, dans sa position de peinture, agencés pour être sectionnés ou rompus, après l'opération de peinture (c).

2. Procédé selon la revendication 1, **caractérisé en ce que** les moyens de liaison sont aménagés pour maintenir à eux seuls la pièce de carrosserie (2) par rapport au support (3) dans la position dite de peinture.

3. Procédé selon la revendication 1, **caractérisé en ce que** les moyens de liaison comprennent :
- une zone de liaison (13) entre la pièce (2) de carrosserie et le support (3), aménagée de manière insuffisante pour maintenir à elle seule la pièce (2) par rapport au support (3) dans la position dite de peinture
- des moyens supplémentaires (15 ; 6, 17, 18) de positionnement de la pièce (2) par rapport au support (3) dans ladite position de peinture.

4. Procédé selon la revendication 3, **caractérisé en ce que** la zone de liaison (13) est aménagée, par exemple sous la forme d'un film-charnière, pour être sectionnée ou rompue, afin de séparer la pièce de carrosserie (2) et le support (3) après l'opération de peinture (c).

5. Procédé selon la revendication 4, **caractérisé en ce que** pendant l'opération de moulage (a), on fabrique la zone de liaison (13) de telle sorte qu'elle permette au moins deux positions relatives de la pièce de carrosserie (2) et du support (3), à savoir une position "de moulage", optimisée pour la fabrication de la pièce de carrosserie (2) et du support (3), et la position dite de peinture.

6. Procédé selon la revendication 3, **caractérisé en ce que** les moyens supplémentaires de positionnement comprennent un jonc reliant le support (3) et la face (2b) de la pièce de carrosserie (2), non exposée à la peinture pulvérisée, sécable, par exemple à sa jonction avec la face (2b) non exposée de la pièce de carrosserie (2).

7. Procédé selon la revendication 5, **caractérisé en ce que** les moyens supplémentaires de positionnement comprennent des moyens d'assemblage réciproque (6, 17, 18) entre, d'une part le support (3), et d'autre part, la face (2b) non exposée de la pièce de carrosserie (2).

8. Ensemble (1) monobloc, obtenu par moulage par une même opération d'une matière plastique, comprenant :
- un support (3)
- une pièce de carrosserie (2), agencée pour être maintenue par rapport au support (3) dans une position relative dans laquelle une face de ladite pièce se trouve exposée
- et des moyens de liaison entre ledit support et ladite pièce, dans sa position exposée, agencés pour être sectionnés ou rompus.
